# EUROPÄISCHE PATENTANMELDUNG

(11) **EP 0 971 468 A1**
(43) Veröffentlichungstag der Anmeldung: **12.01.2000**
(21) Anmeldenummer: 99112581.6
(22) Anmeldetag: 01.07.1999
(51) Int. Cl.: H02G 3/22

(54) **Brandgeschützte Durchführung durch eine Wand für eine elektrische Leitung sowie Verfahren zum Einbringen einer elektrischen Leitung in eine solche Durchführung**

(30) Priorität: 10.07.1998 DE 19830986
(71) Anmelder: SIEMENS AKTIENGESELLSCHAFT, 80333 München (DE)
(72) Erfinder: Werschnik, Werner, Dipl.-Ing., 65428 Rüsselsheim (DE); Gliha, Viktor, Dipl-Ing.(FH), 63456 Hanau (DE)

(57) **Zusammenfassung**

Die Durchführung (2), die zum brandgeschützten Hindurchleiten einer elektrischen Leitung durch eine Wand (8) vorgesehen ist, umfaßt eine Hülse (10), in deren Längsrichtung sich mindestens eine Stange (12) befindet. Der zwischen Stange (12) und Innenwand der Hülse (10) verbleibende Innenraum ist mit einem Brandschutzmittel (14) gefüllt. Die Stange (12) ist aus der Hülse (10) herausziehbar, so daß eine Längsöffnung entsteht, in die die besagte elektrische Leitung eingeführt werden kann. Innerhalb der Hülse (10) kann auch mehr als eine Stange (12) untergebracht sein, so daß ein Reservepotential für die Unterbringung mehrerer Elektrokabel besteht.

## Beschreibung

Die Erfindung bezieht sich auf eine Einrichtung zur Herstellung einer Durchführung durch eine Wand für eine elektrische Leitung unter Beachtung des Brandschutzes. Sie bezieht sich weiter auf eine brandgeschützte Durchführung durch eine Wand für eine elektrische Leitung. Und sie bezieht sich schließlich auch auf ein Verfahren zum Einbringen einer elektrischen Leitung in eine Durchführung durch eine Wand unter Beachtung des Brandschutzes.

Unter dem Begriff "Wand" wird hier eine Brandschutzwand verstanden, die zwei Räume voneinander trennt und beispielsweise eine Seitenwand, ein Fußboden oder eine Decke sein kann.

Es gibt Wände (Seitenwände, Böden und Decken) in Industrieanlagen, aber auch in Kraftwerken, die zur Brandabschottung dienen. Durch solche Wände hindurch müssen elektrische Leitungen oder Elektrokabel, und zwar Leistungskabel, aber auch Schwachstromkabel, geführt werden, um z.B. Anlagenteile mit Strom zu versorgen und/oder zu steuern oder aber Meßsignale weiterzuleiten. Häufig wird durch einen besonders dafür vorgesehenen Durchbruch der Wand, der mit einem Brandschutzmörtel geschlossen ist, eine größere Anzahl von Elektrokabeln hindurchgeführt. Ein Problem bereitet hier die Nachrüstung mit weiteren Elektrokabeln. Gelegentlich stellt sich heraus, daß weitere Verbindungen von dem einen Raum in den anderen erforderlich sind. Der mit Brandschutzmörtel geschlossene Durchbruch in der Wand kann in der Regel nicht durchbohrt werden, ohne daß man Gefahr läuft, daß dort bereits installierte Elektrokabel beschädigt werden. Denn diese Elektrokabel verlaufen häufig schräg, so daß ihre genaue Position nicht ohne weiteres zu ermitteln ist. Bei einer Beschädigung der Schutzisolierung eines beim Durchbohren getroffenen Elektrokabels ist eine aufwendige und kostenintensive Auswechslung desselben notwendig. Außerdem ist nicht sichergestellt, daß beim Anbohren des verschlossenen Durchbruchs eine definierte Öffnung entsteht, da der im Durchbruch eingesetzte Mörtel ausbrechen kann.

Im ausgeübten Stand der Technik hat man bisher Weichschott (das ist Schottmaterial, das mit Kunststoffteilchen versetzt ist) oder Brandschutzkissen eingesetzt, um Durchführungen für Elektrokabel zu ermöglichen. Dies sind allerdings recht kostenintensive Lösungen. Auch auf dem Gebiet des Brandschutzes ist man bestrebt, kostengünstigere Lösungen zu finden.

Wie bereits dargelegt, besteht gelegentlich die Notwendigkeit, nachträglich ein oder mehrere Elektrokabel durch eine vorhandene Brandschutzwand hindurchzuführen. Auch besteht bereits beim Gießen oder Mauern der Brandschutzwand gelegentlich die vorausschauende Überlegung, für weitere Anwendungsfälle Vorbereitungen zu treffen, um ein oder mehrere Reservekabel später einmal ohne große Umstände durch die Brandschutzwand hindurchführen zu können. Diesen Problemen hat sich die vorliegende Erfindung gewidmet.

Der Erfindung liegt daher die Aufgabe zugrunde,
a) eine Einrichtung zur Herstellung einer Durchführung durch eine Wand für eine elektrische Leitung unter Beachtung des Brandschutzes,
b) eine brandgeschützte Durchführung durch eine Wand für eine elektrische Leitung sowie
c) ein Verfahren zum Einbringen einer elektrischen Leitung in eine Durchführung durch eine Wand unter Beachtung des Brandschutzes
   anzugeben, die kostengünstig sind und die Beschädigungen bereits verlegter elektrischer Leitungen (Elektrokabel) sowie der einzubringenden Leitung vermeiden.

Die Lösung der erstgenannten Aufgabe ist erfindungsgemäß dadurch gekennzeichnet,
- daß eine Hülse vorgesehen ist,
- daß in die Längsrichtung der Hülse mindestens eine Stange einführbar ist, und
- daß nach Einführung der Stange in die Hülse der verbleibende Innenraum mit einem Brandschutzmittel, insbesondere mit Brandschutz-Mörtel, füllbar ist.

Die Lösung der zweitgenannten Aufgabe gelingt erfindungsgemäß durch eine Durchführung, die gekennzeichnet ist dadurch,
- daß eine Hülse vorgesehen ist,
- daß in Längsrichtung der Hülse mindestens eine Stange eingeführt ist,
- daß der verbleibende Innenraum in der Hülse mit einem Brandschutzmittel, insbesondere mit Brandschutz-Mörtel, gefüllt ist, und
- daß die Stange aus der Hülse herausnehmbar ist.

Die Hülse und die Stange oder die Stangen besitzen hierbei bevorzugt einen runden Querschnitt, um die Herausnehmbarkeit der Stange(n) aus dem Brandschutzmittel bzw. die Herausnehmbarkeit des Brandschutzmittels aus dem Innenraum der Hülse zu erleichtern. Bei der Hülse kann es sich insbesondere um ein Blechrohr und bei der Stange um eine Metall-Stange handeln. Beide sind bevorzugt aus Gründen des Korrosionsschutzes verzinkt.

Die Stange kann an einem Ende ein Gewinde besitzen, und mit Hilfe dieses Gewindes kann an der Stange eine das Ende der Hülse verschließende Kappe befestigt sein. Diese Kappe verhindert beim Einfüllen das Auslaufen des Brandschutzmittels. Eine solche Kappe kann auch am anderen Ende der Hülse vorgesehen sein.

Bevorzugt ist die Hülse in oder an der Brandschutzwand in irgend einer Form befestigt. Diese Befestigung kann bereits vor Erstellung der Wand durch z.B. Beton-Gießen mittels eines Betongitters erfolgt sein. Die Befestigung kann aber auch nachträglich im Bereich eines Durchbruchs durch die Wand durch Ausgießen mit Brandschutzmittel vorgenommen worden sein.

Weitere vorteilhafte Ausführungsformen der brandgeschützten Durchführung sind in den Unteransprüchen beschrieben.

Die Lösung der drittgenannten Aufgabe ist erfindungsgemäß dadurch gekennzeichnet,
a) daß eine Hülse, die mit mindestens einer Stange in ihrer Längsrichtung versehen ist, mit einem Brandschutzmittel, bevorzugt mit Brandschutzmörtel, gefüllt wird,
b) daß nach Aushärten des Brandschutzmittels die Hülse in die Wand eingesetzt wird,
c) daß bei Bedarf die Stange aus dem Innenraum der Hülse entfernt wird, wodurch eine Längsöffnung im ausgehärteten Brandschutzmittel verbleibt, und
d) daß die elektrische Leitung durch die Längsöffnung geführt und dort fixiert wird.

Die elektrische Leitung kann hierbei durch Einfüllen von Brandschutzmittel, insbesondere von Brandschutzmörtel, in die Längsöffnung fixiert werden.

Bevorzugte Ausgestaltungen des Verfahrens sind in den Unteransprüchen gekennzeichnet.

Ausführungsbeispiele der Erfindung werden im folgenden anhand von drei Figuren näher erläutert. Es zeigen:
- Figur 1: im Schnitt eine in eine Brandschutzwand eingesetzte brandgeschützte Durchführung für eine elektrische Leitung in der Reserveposition,
- Figur 2: die brandgeschützte Durchführung von Figur 1 im Querschnitt und
- Figur 3: einen Wanddurchbruch, der mit Mörtelschott vergossen ist und eine Anzahl von durchgeführten Elektrokabeln sowie drei Reservedurchführungen für Elektrokabel gemäß Figur 1 besitzt.

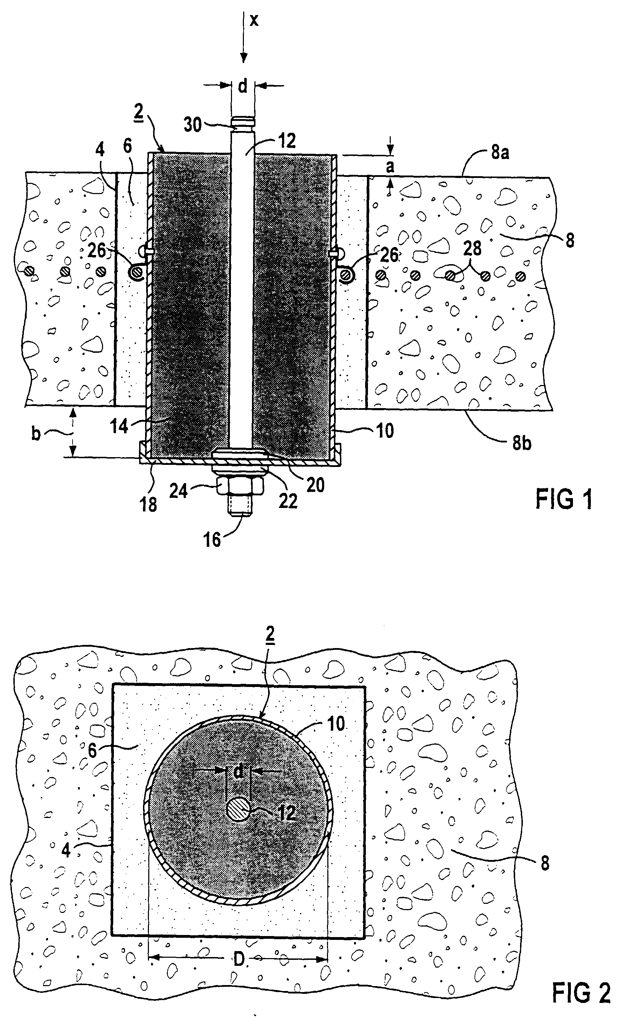

Figuren 1 und 2 zeigen eine brandgeschützte Durchführung 2 für eine (nicht dargestellte) elektrische Leitung. Die Durchführung 2 befindet sich in ihrer Reserveposition; sie ist also vor dem Ausbau der später beschriebenen zentralen Stange 12 und vor dem Einziehen der besagten elektrischen Leitung gezeigt. Die Durchführung 2 ist zentral in einem viereckigen, speziell in einem quadratischen Durchbruch 4 einer Brandschutz-Wand 8 aus Beton oder Mörtel angeordnet. Die Wand 8 dient zum Abschotten eines ersten Raums von einem zweiten Raum. Es kann sich dabei um eine Seitenwand, um eine Decke oder um den Boden eines Raums handeln. Der Abstand der Durchführung 2 vom Rand des Durchbruchs 4 kann beispielsweise 50 bis 100 mm betragen. Der Durchbruch 4 ist mit einem Brandschutzmittel 6, insbesondere mit Mörtelschott oder Brandschutz-Mörtel, gefüllt. Dieses Brandschutzmittel 6 ist nach dem Einfüllen ausgehärtet. Es trägt somit die Durchführung 2.

Kernstück der Durchführung 2 ist eine Hülse 10. Sie besteht aus Metall und hat hier bevorzugt einen runden Querschnitt. Es kann sich dabei um ein handelsüblich verzinktes Blechrohr oder Dachentwässerungsrohr der Nennweite 25, 50, 75 oder 125 mm etc. handeln. Der Innendurchmesser D der Hülse 10 ist abhängig vom Durchmesser des Kabels, das später durch ihren Innenraum hindurchgeführt werden soll. Ein solches Rohr wird bei der Herstellung als Stangenware derart abgelängt, daß ein Überstand a und/oder b zur Außenfläche 8a bzw. 8b der Wand 8 gegeben ist. Dieser Überstand a und/oder b ist vorteilhaft, denn er verhindert ein Abknicken der eingezogenen elektrischen Leitung.

Zentral in der Hülse 10 erstreckt sich in deren Längsrichtung eine Stange 12. Diese Stange 12 besteht aus einem Metall, bevorzugt aus Stahl, und besitzt einen runden Querschnitt. Statt einer massiven Stange 12 kann auch ein Rohr gleichen Durchmessers d verwendet werden. Der Durchmesser d ist so bemessen, daß er etwas größer ist als der Durchmesser der später einzuziehenden elektrischen Leitung. Der Durchmesser d ist wesentlich kleiner als der Innendurchmesser D der Hülse 10.

Es soll hier festgehalten werden, daß anstelle einer einzelnen Stange 12 innerhalb der Hülse 10 mehrere Stangen 12 parallel zueinander untergebracht sein können, um Raum für mehrere später einzubringende Leitungen zu reservieren.

Ersichtlich ist der zwischen der Innenwand der Hülse 10 und der Stange 12 verbleibende Innenraum mit einem Brandschutzmittel 14, insbesondere mit Brandschutz-Mörtel, gefüllt. Ein solcher Brandschutz-Mörtel wird auch als Mörtelschott bezeichnet. Er kann relativ einfach in flüssiger Form angesetzt werden und härtet nach dem Eingießen aus. Allerdings sollte man die eventuell später herauszunehmende Menge an Brandschutzmörtel durch die Konstruktion möglichst gering halten, da es sich dabei um einen Abfall handelt, der als Sondermüll behandelt werden muß.

Es besteht die Möglichkeit, später nach dem Herausnehmen der Stange 12 den Durchmesser d der dadurch entstehenden Längsöffnung durch Bohren zu vergrößern. Dadurch kann die Längsöffnung dem Durchmesser der elektrischen Leitung angepaßt werden. Auch besteht die Möglichkeit, beim Einsatz von mehreren elektrischen Leitungen das Brandschutzmittel 14 insgesamt aus der Hülse 10 zu entfernen. Nach Einziehen des elektrischen Leiters oder der elektrischen Leiter in die Hülse 10 kann der verbleibende Innenraum ausgegossen werden, um eine Fixierung der Leitung(en) zu gewährleisten.

Die Stange 12 besitzt am unteren Ende ein Gewinde 16. Mit Hilfe dieses Gewindes 16 kann an der Stange 12 eine das untere Ende der Hülse 10 verschließende Kappe 18, die z.B. aus Eisenblech besteht, befestigt werden. Zur Befestigung dienen eine erste Scheibe 20, die an der Stange 12 befestigt ist, eine zweite Scheibe 22, die eine Gegenscheibe darstellt, und eine Gewindemutter 24, die von unten aufgeschraubt wird. Nach dem Aufsetzen der Kappe 18 mit Hilfe der Bauteile 20, 22 und 24 erfolgt die Füllung der Hülse 10 mit dem flüssigen Brandschutzmittel 14. Dieses Füllen erfolgt vor dem Positionieren im Bereich des Durchbruchs 4, und zwar vor oder nach Erstellung der Wand 8.

Je nach Bedarf kann auch das obere Ende der Hülse 10 mit einer (nicht dargestellten) Kappe verschlossen werden.

Die Fixierung der Hülse 10 an der gewünschten Stelle erfolgt über angenietete, hakenförmige Blechstreifen 26. Diese Blechstreifen 26 wirken als Befestigungseinrichtung. Die Blechstreifen 26 sind an den Elementen einer Trägereinheit 28 festgemacht, z.B. festgeklemmt oder eingerastet. Bei dieser Trägereinheit 28 kann es sich um ein übliches Betongitter handeln, das im Bausektor verwendet wird. Es läßt sich demgemäß eine verzinkte Baustahlmatte mit gewünschter Maschengröße, wie sie im Rohbau verwendet wird, einsetzen.

Beim Einbau geht man folgendermaßen vor: Man baut zunächst die mit Brandschutzmittel 14 gefüllte Hülse 10 in eine Trägereinheit 28 oder aber in den Durchbruch 4 einer Wand 8 ein. Dabei wird darauf geachtet, daß ein Überstand a und/oder b vorhanden ist. Sodann wird das Brandschutzmittel 6 eingebracht und/oder die Wand 8 aus Beton gegossen.

Von Bedeutung ist nun, daß sich die Stange 12 aus dem Brandschutzmittel 14 entfernen läßt. Dieser Ausbau wird bei Bedarf vorgenommen, nämlich dann, wenn eine neue elektrische Leitung verlegt werden soll. Der Ausbau geschieht mittels Kraftanwendung in Längsrichtung der Stange 12, was durch ein kleines x angedeutet ist. Um den Vorgang des Ausbaus zu erleichtern, kann am anderen (oberen) Ende der Stange 12 eine Hilfseinrichtung 30 vorgesehen sein. Dabei kann es sich um eine Eindrehung in der Stange 12 handeln, die für eine Abziehvorrichtung gedacht ist. Nach dem Herausnehmen der Stange 12 sind die Teile 12, 18, 20, 22 und 24 wiederverwendbar.

Es soll noch angemerkt werden, daß die Metallteile 10, 12 und 18 bevorzugt verzinkt sein sollten, da durch diese Eigenschaft die Gleitfähigkeit zum Auspressen des Brandschutzmittels 14 aus der Hülse 10 sowie der Stange 12 aus dem Brandschutzmittel 14 erhöht wird und gleichzeitig ein Korrosionsschutz gegeben ist. Nach dem Entfernen der Bauteile 12, 18 bis 24 wird in die dadurch geschaffene Längsöffnung das elektrische Kabel oder werden mehrere elektrische Kabel in die Hülse 10 eingebaut und rundum mit Brandschutz-Mörtel versehen. Das so eingebaute Kabel ist im Bereich der beiden Enden der Hülse 10 aufgrund der dargestellten Konstruktion vor dem Abknicken geschützt.

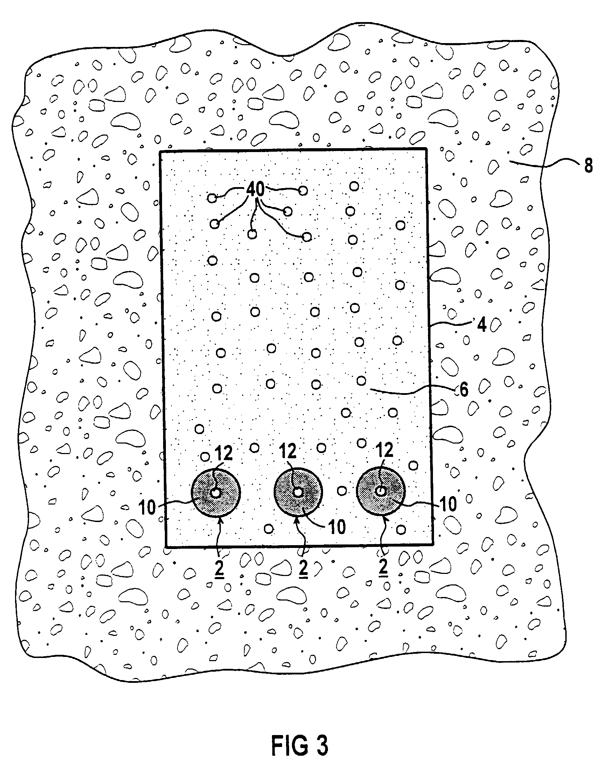

In Figur 3 ist wiederum ein rechteckiger Durchbruch 4 dargestellt, der sich in einer Wand 8 befindet. Die Fläche des Durchbruchs 4 kann beispielsweise 50 cm x 120 cm betragen. Die Wand 8 besteht auch hier wiederum aus Beton.

Der Durchbruch 4 ist mit einem Brandschutzmittel 6, insbesondere mit einem Brandschutzmörtel, gefüllt, das inzwischen ausgehärtet ist. In diesem Brandschutzmittel 6 ist eine Vielzahl von elektrischen Leitungen und Elektrokabeln 40 eingegossen. Diese Elektrokabel 40 werden beispielsweise in einer ersten Ausbauphase bereits benötigt. Weiterhin sind innerhalb des Brandschutzmittels 6 drei Durchführungen 2 der bei Figur 1 und 2 beschriebenen Art vorgesehen. Diese Durchführungen 2 dienen zur Reserve und sind beispielsweise für eine zweite Ausbauphase vorgesehen. Bei Bedarf können hier drei weitere Elektrokabel (oder sogar pro Hülse 10 mehr als ein Elektrokabel) hindurchgeführt werden.

## Patentansprüche

1. Einrichtung zur Herstellung einer Durchführung (2) durch eine Wand (8) für eine elektrische Leitung unter Beachtung des Brandschutzes,
**dadurch gekennzeichnet,**
- daß eine Hülse (10) vorgesehen ist,
- daß in die Längsrichtung der Hülse (10) mindestens eine Stange (12) einführbar ist, und
- daß nach Einführung der Stange (12) in die Hülse (10) der verbleibende Innenraum mit einem Brandschutzmittel (14), insbesondere mit Brandschutz-Mörtel, füllbar ist.

2. Brandgeschützte Durchführung (2) durch eine Wand (8) für eine elektrische Leitung,
**dadurch gekennzeichnet,**
- daß eine Hülse (10) vorgesehen ist,
- daß in Längsrichtung der Hülse (10) mindestens eine Stange (12) eingeführt ist,
- daß der verbleibende Innenraum in der Hülse (10) mit einem Brandschutzmittel (14), insbesondere mit Brandschutz-Mörtel, gefüllt ist, und
- daß die Stange (12) aus der Hülse (10) herausnehmbar ist.

3. Durchführung (2) nach Anspruch 2,
**dadurch gekennzeichnet,** daß die Hülse (10) einen runden Querschnitt besitzt.

4. Durchführung (2) nach Anspruch 2 oder 3,
**dadurch gekennzeichnet,** daß die Stange (12) einen runden Querschnitt besitzt.

5. Durchführung (2) nach einem der Ansprüche 2 bis 4,
**dadurch gekennzeichnet,** daß der Durchmesser (d) der Stange (12) wesentlich kleiner ist als der Innendurchmesser (D) der Hülse (10).

6. Durchführung (2) nach einem der Ansprüche 2 bis 5,
**dadurch gekennzeichnet,** daß die Stange (12) aus Metall, insbesondere aus einem Stahl, besteht.

7. Durchführung (2) nach einem der Ansprüche 2 bis 6,
**dadurch gekennzeichnet,** daß die Stange (12) als Rohr, bevorzugt aber als massive Stange ausgebildet ist.

8. Durchführung (2) nach einem der Ansprüche 2 bis 7,
**dadurch gekennzeichnet,** daß die Stange (12) an einem Ende ein Gewinde (16) besitzt, und daß mit dem Gewinde (16) an der Stange (12) eine das eine Ende der Hülse (10) verschließende Kappe (18) befestigt ist.

9. Durchführung (2) nach einem der Ansprüche 2 bis 8,
**dadurch gekennzeichnet,** daß die Hülse (10) in oder an der Wand (8) befestigt ist.

10. Durchführung (2) nach Anspruch 9,
**dadurch gekennzeichnet,** daß die Hülse (10) an ihrer Außenseite mindestens eine Befestigungseinrichtung besitzt.

11. Durchführung (2) nach Anspruch 10,
**dadurch gekennzeichnet,** daß die Befestigungseinrichtung ein angenieteter Blechstreifen (26) ist, der in einem Trägergitter (28) einrastbar ist.

12. Durchführung (2) nach einem der Ansprüche 9 bis 11,
**dadurch gekennzeichnet,** daß die Hülse (10) in einem Durchbruch (4) der Wand (8), der mit einem Brandschutzmittel (6), bevorzugt mit Brandschutz-Mörtel, gefüllt ist, angeordnet ist.

13. Durchführung (2) nach einem der Ansprüche 2 bis 12,
**dadurch gekennzeichnet,** daß die Hülse (10) gegenüber der Wand (8) zumindest an einem Ende einen Überstand (a, b) aufweist.

14. Durchführung (2) nach einem der Ansprüche 2 bis 13,
**dadurch gekennzeichnet,** daß zentral in die Hülse (10) nur eine einzige herausnehmbare Stange (12) eingeführt ist, deren Durchmesser (d) wenig größer ist als der Durchmesser der einzuführenden elektrischen Leitung.

15. Verfahren zum Einbringen einer elektrischen Leitung in eine Durchführung (2) durch eine Wand (8) unter Beachtung des Brandschutzes,
**dadurch gekennzeichnet,**
a) daß eine Hülse (10), die mit mindestens einer Stange (12) in ihrer Längsrichtung versehen ist, mit einem Brandschutzmittel (14), bevorzugt mit Brandschutz-Mörtel, gefüllt wird,
b) daß nach Aushärten des Brandschutzmittels (14) die Hülse (10) in die Wand (8) eingesetzt wird,
c) daß bei Bedarf die Stange (12) aus dem Innenraum der Hülse (10) entfernt wird, wodurch eine Längsöffnung im ausgehärteten Brandschutzmittel (14) verbleibt, und
d) daß die elektrische Leitung durch die Längsöffnung geführt und dort fixiert wird.

16. Verfahren nach Anspruch 15,
**dadurch gekennzeichnet,** daß die elektrische Leitung durch Einfüllen von Brandschutzmittel, insbesondere von Brandschutz-Mörtel, in der Längsöffnung fixiert wird.

17. Verfahren nach Anspruch 15 oder 16,
**dadurch gekennzeichnet,** daß die Hülse (10) vor oder nach dem Füllen mit dem Brandschutzmittel (14) im Bereich der zu erstellenden Wand (8) fixiert wird.

18. Verfahren nach Anspruch 15 oder 16,
**dadurch gekennzeichnet,** daß die Hülse (10) vor oder nach dem Füllen mit dem Brandschutzmittel (14) im Bereich eines Durchbruchs (4) durch die Wand (8) fixiert wird, bevorzugt durch Auffüllen des Durchbruchs (4) mit einem Brandschutzmittel (6).
